(19) **Europäisches Patentamt / European Patent Office / Office européen des brevets**

(11) **EP 4 603 867 A1**

(12) **EUROPEAN PATENT APPLICATION**

(43) Date of publication:
20.08.2025 Bulletin 2025/34

(21) Application number: 24193836.4

(22) Date of filing: 09.08.2024

(51) International Patent Classification (IPC):
**G01S 7/35** (2006.01)   **G01S 13/34** (2006.01)
**G01S 13/58** (2006.01)

(52) Cooperative Patent Classification (CPC):
**G01S 13/584; G01S 7/354; G01S 13/343**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 19.02.2024 KR 20240023634

(71) Applicant: **Bitsensing Inc.**
**Seongnam-si, Gyeonggi-do 13105 (KR)**

(72) Inventors:
• PARK, Rae Seung
22218 Incheon (KR)
• KO, Chan Bin
05215 Seoul (KR)
• LIM, Hae Seung
13105 Seongnam-si, Gyeonggi-do (KR)
• LEE, Jae Eun
06049 Seoul (KR)

(74) Representative: **BCKIP Part mbB**
**MK1**
**Landsbergerstraße 98, 3.Stock**
**80339 München (DE)**

(54) **RADAR DEVICE AND METHOD OF PROCESSING RADAR SIGNAL**

(57) A radar device includes a plurality of transmit antennas (140), a plurality of receive antennas (150), and a monolithic microwave integrated circuit, MMIC (100), configured to control the plurality of transmit antennas and the plurality of receive antennas. The MIMIC is configured to, transmit a radar signal through the plurality of transmit antennas in accordance with a Doppler division multiple access, DDMA, receive a reflected signal, which is at least a part of the radar signal reflected from a target, through the plurality of receive antennas, estimate a transmit antenna corresponding to the reflected signal among the plurality of transmit antennas based on a phase corresponding to the received reflected signal, and obtain radar data corresponding to the target based on the estimated transmit antenna and the reflected signal.

*FIG. 1*

EP 4 603 867 A1

## Description

### TECHNICAL FIELD

The present disclosure relates to a radar device and a method of processing a radar signal.

### BACKGROUND

A radar device needs to have high angular resolution to detect or track the distance, velocity, and angle of a target device by transmitting and receiving electronic waves. Conventional radar devices have a structure in which a plurality of transmit antennas and a plurality of receive antennas are arrayed to increase angular resolution.

A frequency-modulated continuous wave (FMCW) radar device uses a transmit signal whose transmit frequency is ramp-modulated, and such a signal is transmitted continuously during the ramp. Also, the FMCW radar device generates a baseband signal from a receive signal through mixing with the transmit signal. A frequency of the baseband signal corresponds to a frequency difference between a signal transmitted at a given time point and a signal received at the same time point. Herein, due to frequency modulation of the transmit signal, this frequency difference depends on the runtime of a signal directed from the radar device to a target or reflected from the target. Due to the Doppler effect, the frequency difference also contains a component that results from the relative velocity of the target.

MIMO (Multi Input Multi Output) is a technique widely used to enlarge an effective radar aperture size of a radar device by synthesizing a virtual receiver array by combination of a plurality of physically implemented transmitter channels and receiver channels. However, it has been difficult for the FMCW radar device with the MIMO to differentiate among signals transmitted from a plurality of transmit antennas.

### PRIOR ART DOCUMENT

[Patent Document]

(Patent Document 001) U.S. Patent Laid-open Publication No. 2022/0334240 A1

### SUMMARY

In view of the foregoing, the present disclosure is conceived to improve a target detection probability of a radar signal transmitted from a radar device based on Doppler division multiple access (DDMA).

The problems to be solved by the present disclosure are not limited to the above-described problems. There may be other problems to be solved by the present disclosure.

A radar device according to one embodiment of the present disclosure may include a plurality of transmit antennas, a plurality of receive antennas, and a monolithic microwave integrated circuit (MMIC) configured to control the plurality of transmit antennas and the plurality of receive antennas, wherein the MIMIC may be configured to, transmit a radar signal through the plurality of transmit antennas in accordance with a Doppler division multiple access (DDMA), receive a reflected signal, which is at least a part of the radar signal reflected from a target, through the plurality of receive antennas, estimate a transmit antenna corresponding to the reflected signal among the plurality of transmit antennas based on a phase corresponding to the received reflected signal, and obtain radar data corresponding to the target based on the estimated transmit antenna and the reflected signal.

A method for processing a radar signal according to another embodiment of the present disclosure may include transmitting a radar signal through a plurality of transmit antennas in accordance with a Doppler division multiple access (DDMA), receiving a reflected signal, which is at least a part of the radar signal reflected from a target, through a plurality of receive antennas, estimating a transmit antenna corresponding to the reflected signal among the plurality of transmit antennas based on a phase corresponding to the received reflected signal, and obtaining radar data corresponding to the target based on the estimated transmit antenna and the reflected signal.

According to an embodiment of the present disclosure, it is possible to differentiate among physical transmit antennas in a DDMA mode of a radar device, and also possible to improve a signal-to-noise ratio (SNR) for peaks by integrating data in the transmit antennas.

Further, according to an embodiment of the present disclosure, it is possible to improve a target detection probability by applying a uniform phase step in a Doppler axis direction, and also possible to reduce the computation amount of data processing.

## BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.

**FIG. 1** shows the configuration of a radar device according to an embodiment of the present disclosure.

**FIG. 2** is a time-frequency graph of a radar signal according to the embodiment of the present disclosure.

**FIG. 3A** shows graphs of Doppler division multiple access (DDMA) transmit signals according to the embodiment of the present disclosure.

**FIG. 3B** shows graphs of time division multiple access (TDMA) transmit signals according to a comparative example of the present disclosure.

**FIG. 4A** is a range-Doppler map (R-D Map) of DDMA reflected signals according to the embodiment of the present disclosure.

**FIG. 4B** is an R-D Map of TDMA reflected signals according to the comparative example of the present disclosure.

**FIG. 5A** is an R-D Map of reflected signals corresponding to transmit signals with a uniform phase step according to the embodiment of the present disclosure, and **FIG. 5B** is a portion of **FIG. 5A.**

**FIG. 5C** is an R-D Map of reflected signals corresponding to transmit signals with a non-uniform phase step according to the comparative example of the present disclosure, and **FIG. 5D** is a portion of **FIG. 5C.**

**FIG. 6A** is an R-D Map in which 2D FFT data of reflected signals are integrated according to an embodiment of the present disclosure.

**FIG. 6B** and **FIG. 6C** are examples of the R-D Map of **FIG. 6A** after one-dimensional floating.

**FIG. 7A** shows a physical array of a plurality of transmit antennas and a plurality of receive antennas according to an embodiment of the present disclosure.

**FIG. 7B** shows a virtual array of the plurality of transmit antennas and the plurality of receive antennas according to the embodiment of the present disclosure.

**FIG. 8A** shows graphs of cost functions depending on an angle according to an embodiment of the present disclosure.

**FIG. 8B** is an R-D Map showing 2D FFT data of reflected signals according to the embodiment of the present disclosure.

**FIG. 9** is an R-D Map showing 2D FFT data of reflected signals integrated in each of a transmit antenna and a receive antenna according to an embodiment of the present disclosure.

**FIG. 10** is a flowchart showing a method of processing a radar signal according to an embodiment of the present disclosure.

## DETAILED DESCRIPTION

Hereinafter, embodiments of the present disclosure will be described in detail with reference to the accompanying drawings to be readily implemented by a person with ordinary skill in the art to which the present disclosure belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Through the whole document, when a member is said to be located "on" another member, this includes not only the case where the member is in contact with the other member, but also the case where another member exists between the two members.

Through the whole document, when a part "comprises or includes" a certain components, this means that it may further include other components rather than excluding other components unless specifically stated to the contrary.

As used through the whole document, the terms "about", "substantially", etc. are used to mean at or close to that value when manufacturing and material tolerances inherent to the stated meaning are presented, it is used to prevent unscrupulous infringers from taking unfair advantage of disclosures in which precise or absolute figures are mentioned to help understanding of the present disclosure. The term "step of" or "step of" as used through the whole document does not mean "step for."

Through the whole document, the term "combination(s) thereof" included in the Markushi format expression means a mixture or combination of one or more selected from a group consisting of the components described in the Markushi format expression, and means containing one or more selected from the group consisting of the above components.

Through the whole document, references to "A and/or B" mean "A or B, or A and B."

Hereinafter, embodiments of the present disclosure will be described in detail with reference to the accompanying drawings. However, the present disclosure may not be limited to these implementations, examples, and drawings.

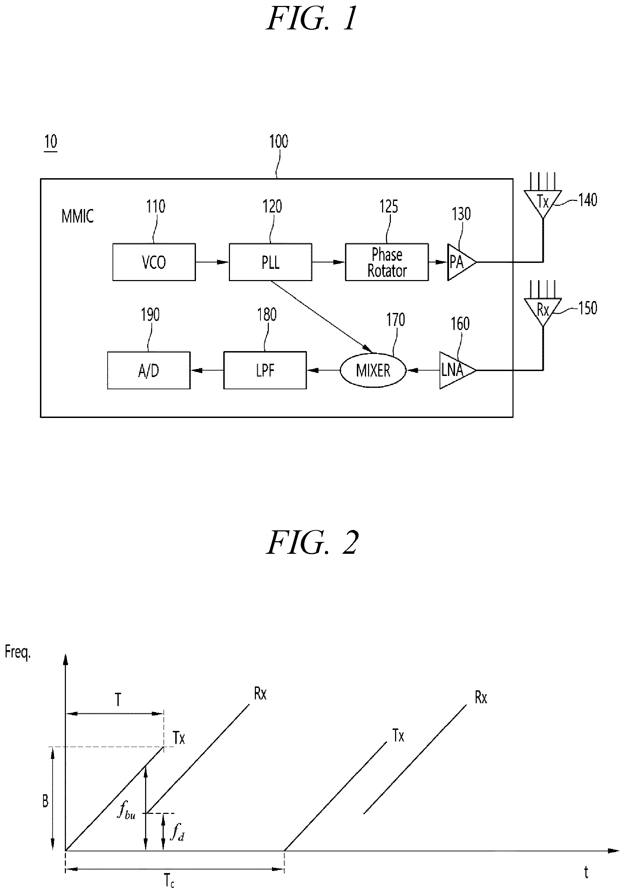

**FIG.** 1 shows the configuration of a radar device 10 according to an embodiment of the present disclosure.

Referring to **FIG. 1,** the radar device 10 according to an embodiment may be configured to transmit an/or receive a radar signal output from a monolithic microwave integrated circuit (MMIC) 100 through a transmit antenna circuit 140 and/or a receive antenna circuit 150.

In an embodiment, the MMIC 100 may be configured to generate and transmit a radar signal (e.g., a transmit signal). In an embodiment, the MMIC 100 may be configured to receive a radar signal (e.g., a reflected signa) from the outside. For example, the radar signal may be an electromagnetic spectrum with mm-wave frequencies or in a frequency range of from 3 MHz to 300 GHz.

In an embodiment, the radar device 10 may be configured to transition or guide the radar signal generated by the MMIC 100 to a plurality of transmit antennas, and/or to transition or guide a radar signal received from a plurality of receive antennas to the MMIC 100.

In an embodiment, the radar device 10 may serve as a multiple-input multiple-output (MIMO) radar for proper transmit antenna spacing, and can emulate a larger aperture phased array radar. This larger array may be referred to as a virtual array.

In an embodiment, the MMIC 100 may be a microwave integrated circuit including a voltage controlled oscillator (VCO) 110, a phase locked loop (PLL) 120, a power amplifier (PA) 130, the transmit antenna circuit 140, the receive antenna circuit 150, a low noise amplifier (LNA) 160, a MIXER 170, a low phase filter (LPF) 180, and/or an analog-to-digital converter (A/D) 190.

The VCO 110 is an oscillator configured to generate a variable frequency that is linearly proportional to an input controlled voltage, and may generate a sine wave whose frequency increases linearly with voltage by varying the input controlled voltage and controlling an output oscillation frequency.

The PLL 120 is a circuit configured to synchronize an output signal with a frequency and a phase of an input signal by reducing a phase variation rather than an amplitude, and may perform phase drift correction and frequency up-conversion.

A phase rotator 125 is configured to generate a phase change of a transmit signal or a reflected signal. The phase rotator 125 may apply a phase shift with a predetermined magnitude to a transmit signal transmitted through the transmit antenna circuit 140.

The PA 130 is configured to generate a high output power, and may amplify a radar signal. The transmit antenna circuit 140 may radiate the radar signal, which has been amplified by the PA 130, to the outside. In an embodiment, the transmit antenna circuit 140 may include a plurality of transmit antennas (e.g., 4 Tx).

At least a part of the radar signal transmitted through the transmit antenna circuit 140 may be reflected by the target, and the receive antenna circuit 150 may receive a reflected signal reflected by the target. In an embodiment, the receive antenna circuit 150 may include a plurality of receive antennas (e.g., 4 Rx).

The LNA 160 is designed to minimize noise in order to amplify a weak RF signal, and may minimize noise and perform amplification to maximize a signal.

The MIXER 170 may perform frequency down-conversion of a received radar signal by mixing a transmit signal with a reflected signal.

The LPF 180 may filter out a high frequency band while allowing a low frequency band to pass therethrough. The A/D 190 may convert an analog radar signal into a digital one. Therefore, the MMIC 100 may extract a beat frequency including information on the range and the velocity of the received radar signal.

In an embodiment, the reflected signal reflected from the target may be mixed with the transmit signal to generate a low frequency beat signal (e.g., baseband signal), and its frequency may provide the range of the target. This operation may be repeatedly performed on P number of consecutive FMCW chirps.

In an embodiment, a range R to a target may be determined based on a round-trip time between sending a radar signal to the target and receiving the radar signal from the target ($R = c\tau/2$ where $\tau$ is the round-trip time in seconds and c is the velocity of light in meters per second). Thus, the estimation of $\tau$ enables the range measurement.

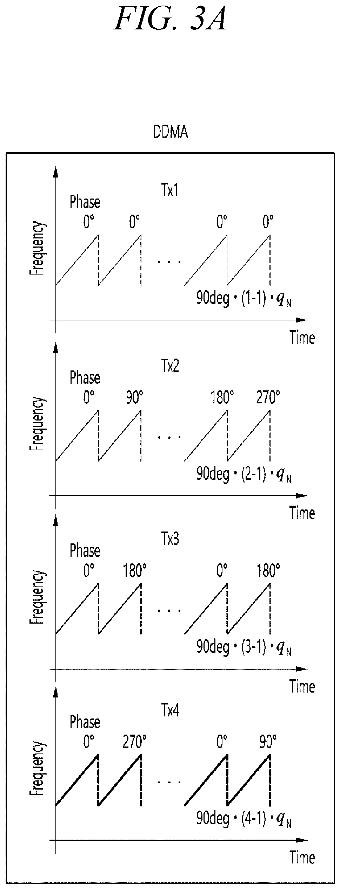

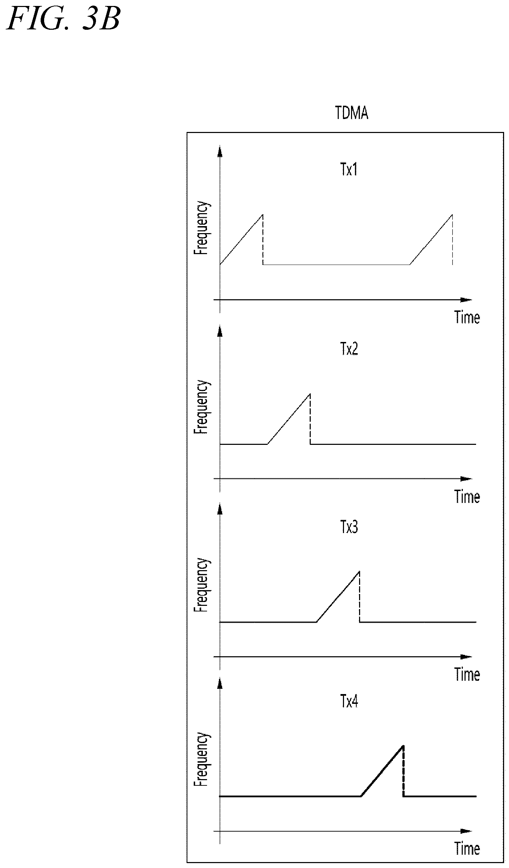

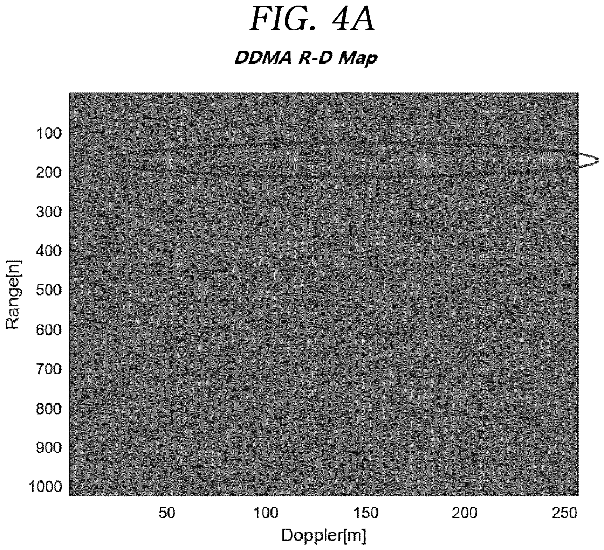

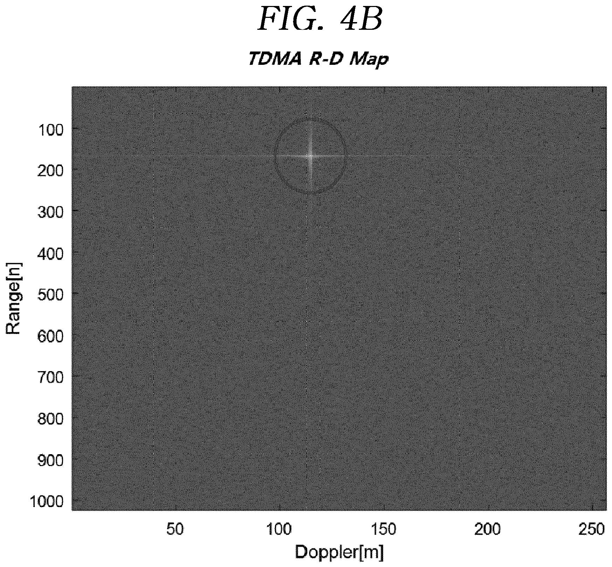

**FIG. 2** is a time-frequency graph of a radar signal according to the embodiment of the present disclosure. **FIG. 3A** shows graphs of Doppler division multiple access (DDMA) transmit signals according to the embodiment of the present disclosure. **FIG. 3B** shows graphs of time division multiple access (TDMA) transmit signals according to a comparative example of the present disclosure. **FIG. 4A** is an R-D Map of DDMA reflected signals according to the embodiment of the present disclosure. **FIG. 4B** is an R-D Map of TDMA reflected signals according to the comparative example of the present disclosure.

Referring to **FIG. 2, FIG. 3A, FIG. 3B, FIG. 4A,** and **FIG. 4B,** the radar device 10 (e.g., the MMIC 100) according to an embodiment may transmit a transmit signal Tx through a plurality of transmit antennas Tx1, Tx2, Tx3 and Tx4 and receive a reflected signal Rx reflected from the target through a plurality of receive antennas.

In an embodiment, the radar device 10 may be of FMCW type configured to transmit a continuous signal CW whose frequency is modulated with time. The frequency-modulated continuous signal CW may include periodic and short power pulses and silent periods. The silent periods allow the radar device 10 to receive the reflected signals and serve as timing marks for the radar device 10 to perform range estimation. With a pulsed radar configuration that uses the frequency-modulated continuous signal (CW) pulses, simultaneous range-velocity estimation in multitarget traffic scenarios can be provided. The radar device 10 may transmit periodic FM chirps (or pulses or ramps) whose frequency may increase linearly during the pulse.

The radar device 10 according to an embodiment may control the plurality of transmit antennas Tx1, Tx2, Tx3 and Tx4 to set phases of the FMCW radar chirps of a sequence in accordance with a predefined Doppler division multiple access (DDMA).

The radar device 10 according to an embodiment may transmit a radar signal through the plurality of transmit antennas Tx1, Tx2, Tx3 and Tx4 in accordance with the DDMA. In an embodiment, the radar device 10 may radiate radar signals through the plurality of transmit antennas Tx1, Tx2, Tx3 and Tx4 at the same time, and the radar signals may include a plurality of chirps to which a phase shift with a predetermined magnitude is consecutively applied. According to the DDMA, the radar signal has a different phase for each chirp, and, thus, a frequency shift may occur in a Doppler frequency direction.

If a radar signal is transmitted according to the DDMA, a transmit antenna corresponding to a received reflected signal needs to be distinguished properly in order to estimate the velocity of a target without ambiguities. Therefore, it is possible to accurately estimate the angle of the target.

Conventionally, a phase shift with a non-uniform phase step was applied to estimate a first transmit antenna or an empty band was used to estimate a transmit antenna in order to differentiate among transmit antennas. However, according to the non-uniform phase step, when a signal-to-noise ratio (SNR) is low, a target cannot be detected properly and the computation amount is large, and, thus, an additional computation core may be required. Also, when the empty band is used, the performance of the radar is degraded compared to the magnitude of the radar signal, and the SNR may be decreased.

In an embodiment, the plurality of transmit antennas Tx1, Tx2, Tx3 and Tx4 may radiate radar signals with different phase shifts from each other at the same time. A phase shift with a predetermined magnitude may be set differently for each of the plurality of transmit antennas Tx1, Tx2, Tx3 and Tx4 and may have a uniform magnitude.

In an embodiment, phase shifts previously determined for the respective transmit antennas Tx1, Tx2, Tx3 and Tx4 may uniformly differ by $\vartheta step,$ which may be referred to as "uniform phase step". For example, a phase shift with a uniform magnitude may be set for the transmit antenna Tx1 as 0 Deg Step, the transmit antenna Tx2 as 90 Deg Step, the transmit antenna Tx3 as 180 Deg Step, and the transmit antenna Tx4 as 270 Deg Step.

The phase shifts in the plurality of transmit antennas Tx1, Tx2, Tx3 and Tx4 according to the uniform phase step can be represented by the following equation.

[Equation 1]

$$Phase\ Shift\ \theta_{m,q} = \theta_{Step} \cdot (m-1) \cdot q$$

Herein, m denotes a transmit antenna index, and q denotes a chirp index. For example, a phase step ($\vartheta step$) may be a phase magnitude obtained by dividing 360 Deg by the number of transmit antennas.

In an embodiment, a DDMA reflected signal of the radar device 10 can be represented by the following equation. The following reflected signal may be beat frequency data sampled by an ADC.

[Equation 2]

$$Y_{m,n}(t,q) = \sum_{k=0}^{K-1} e^{i\phi_{m,q}} \cdot e^{-i2\pi \frac{(md_t + nd_r)}{\lambda} \sin(\theta^{(k)})} \cdot e^{-i2\pi \left( f_{bu}{}^{(k)} - f_d{}^{(k)} \right) \frac{t}{f_s}} \cdot e^{-i2\pi f_d{}^{(k)} T_c q}$$

In the above equation, a first component $. \ e^{i\phi_{m,q}}$ represents a phase shift of the signal, a second component .

$$e^{-i2\pi \frac{(md_t + nd_r)}{\lambda} \sin(\theta^{(k)})}$$

represents an angle of the signal, a third component.

$$e^{-i2\pi \left( f_{bu}{}^{(k)} - f_d{}^{(k)} \right) \frac{t}{f_s}}$$

represents a range of the signal, and a fourth component $e^{-i2\pi f_d(k) T_c q}$ represents Doppler of the signal.

In contrast, the radar device 10 may radiate radar signals through the plurality of transmit antennas Tx1, Tx2, Tx3 and Tx4 at different time points in accordance with the time division multiple access (TDMA). Accordingly, periods of time radiating radar signals from the plurality of transmit antennas Tx1, Tx2, Tx3 and Tx4, respectively, may not overlap with each other.

A TDMA reflected signal of the radar device 10 can be represented by the following equation. For example, the following reflected signal may be beat frequency data sampled by the ADC.

[Equation 3]

$$Y_{m,n}(t,q) = \sum_{k=0}^{K-1} rect(\frac{t - qT_c}{T}) \cdot e^{-i2\pi\frac{(md_t+nd_r)}{\lambda}\sin(\theta^{(k)})} \cdot e^{-i2\pi\left(f_{bu}^{(k)}-f_d^{(k)}\right)\frac{t}{f_s}} \cdot e^{-i2\pi f_d^{(k)}T_cq}$$

In the above equation, a first component $rect(\frac{t - qT_c}{T})$ represents a unit rectangular function of the signal, a second component. $e^{-i2\pi\frac{(md_t+nd_r)}{\lambda}\sin(\theta^{(k)})}$ represents an angle of the signal, a third component. $e^{-i2\pi\left(f_{bu}^{(k)}-f_d^{(k)}\right)\frac{t}{f_s}}$ represents a range of the signal, and a fourth component. $e^{-i2\pi f_{d(k)}T_cq}$ represents Doppler of the signal.

A beat frequency. $f_b$ may be a difference between an up-beat frequency $f_{bu} = \mu\frac{2R}{c}$ and a Doppler frequency $f_d = \frac{2v}{\lambda}$ .

Herein, t denotes time (sample Index), . $T_c$ denotes a pulse repetition interval (PRI), $d_t$ denotes a distance between transmit antennas, $d_r$ denotes a distance between receive antennas, $e^{i\phi m,q}$ denotes a phase shift, $f_s$ denotes a sampling frequency, v denotes the velocity of a target, K denotes the number of targets, B denotes a bandwidth, T denotes a sweep time, $\mu$ denotes B/T, R denotes a range from the radar device 10 to the target, c denotes the velocity of light in meters per second, $\lambda$ denotes a wavelength of the radar signal, m denotes a transmit antenna index, n denotes a receive antenna index, and q denotes a chirp index.

The radar device 10 according to an embodiment may convert a received reflected signal into a frequency component in a range-Doppler domain by applying a Fast Fourier Transform (FFT) to the received reflected signal.

In an embodiment, the radar device 10 may perform 2D FFT of reflected signals in a range axis (t axis) and a Doppler axis (q axis). The radar device 10 may obtain a frequency $f_{bu}^{(k)}$- $f_d^{(k)}$ through range FFT, and this frequency is equal to a beat frequency. The radar device 10 may obtain a frequency $f_d^{(k)}$ through Doppler FFT, and this frequency is equal to a Doppler frequency. Therefore, the radar device 10 may obtain the distance and velocity of the target from 2D FFT data of reflected signals.

The radar device 10 according to an embodiment may obtain an R-D Map based on the 2D FFT data of reflected signals of each receive antenna.

In an embodiment, the radar device 10 may obtain the R-D Map by performing non-coherent integration (NCI) of the 2D FFT data of the reflected signals received from each of the plurality of receive antennas. In an embodiment, the radar device 10 may obtain the R-D Map by performing magnitude summation of the 2D FFT data.

For example, 2D FFT data of DDMA reflected signals of the radar device 10 may be integrated according to the following equation.

[Equation 4]

$$RD\,Map(q,s) = \sum_{n=1}^{Rx} |2D\,FFT(n,q,s)|$$

For example, 2D FFT data of TDMA reflected signals of the radar device 10 may be integrated according to the following equation.

[Equation 5]

$$RD\,Map(q,s) = \sum_{m=1}^{Tx}\sum_{n=1}^{Rx} |2D\,FFT(m,n,q,s)|$$

Herein, Tx denotes the number of transmit antennas, Rx denotes the number of receive antennas, q denotes a chirp index, and s denotes a range (sample) index.

For example, TDMA reflected signals may be matched in the order in which the positions of physical antennas corresponding to the respective reflected signals are received.

According to the R-D Map of the DDMA reflected signal shown in **FIG. 4A** in comparison with the R-D Map of the TDMA reflected signal shown in **FIG. 4B,** transmit signals having different phases from each other are transmitted at the same time, and, thus, a reflected signal received from one receive antenna includes transmit signals of all of transmit antennas and the transmit antennas cannot be differentiated in a time axis direction. Therefore, the number of peaks for the same target shown in the R-D Map of the DDMA reflected signal can be equal to the number of transmit antennas, and, thus, data may need to be differentiated so as to correspond to the transmit antennas in a Doppler axis direction.

When the position of a physical antenna cannot be found accurately, a mismatch of antenna positions occurs. Therefore, the angle of the target cannot be estimated properly.

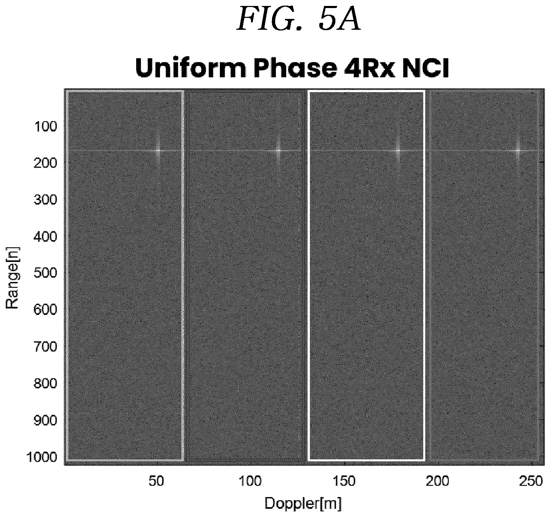

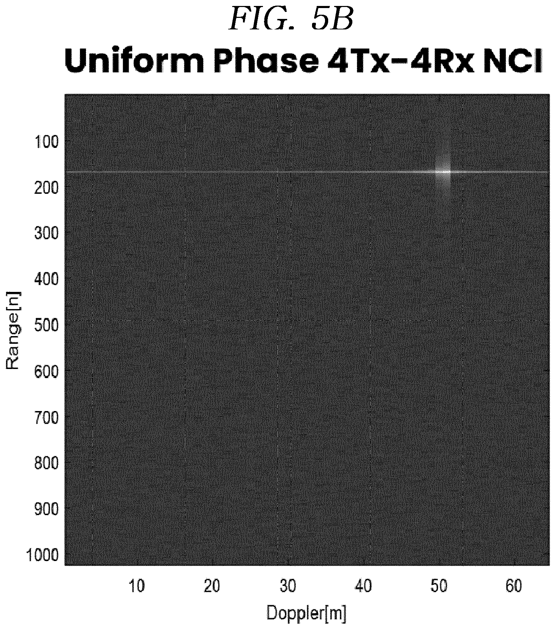

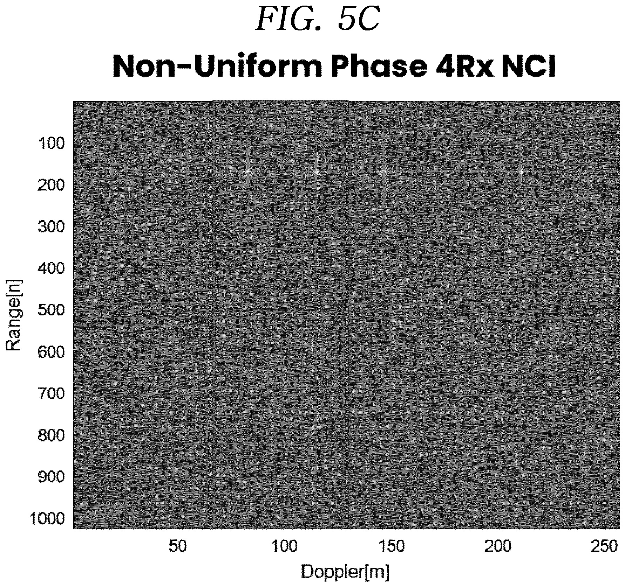

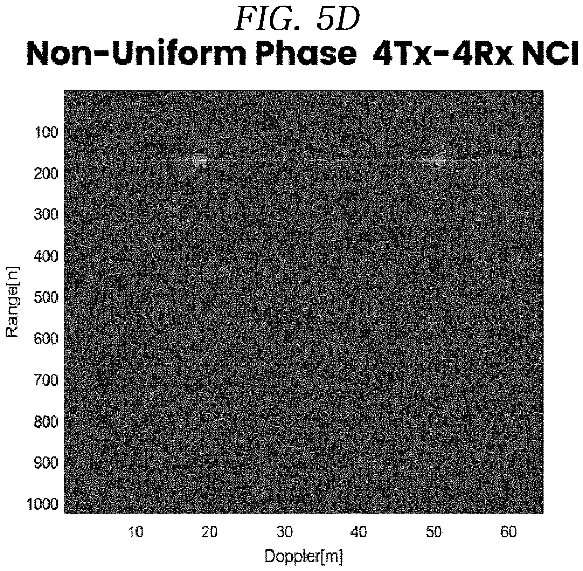

**FIG. 5A** is an R-D Map of reflected signals corresponding to transmit signals with a uniform phase step according to the embodiment of the present disclosure, and **FIG. 5B** is a portion of **FIG.** 5A. **FIG. 5D** is an R-D Map of reflected signals corresponding to transmit signals with a non-uniform phase step according to the comparative example of the present disclosure, and **FIG. 5D** is a portion of **FIG.** 5C.

Referring to **FIG. 5A** and **FIG. 5B,** the radar device 10 according to an embodiment may radiate a transmit signal according to the uniform phase step in which a phase step between phase shifts with a predetermined magnitude is applied to each of a plurality of transmit antennas with the same magnitude. Therefore, when NCI is performed on 2D FFT data of reflected signals received from the plurality of transmit antennas, respectively, peaks for the same target may occur at the same interval in the Doppler axis direction in the R-D Map.

In an embodiment, the radar device 10 divides the Doppler axis into quarters and performs integration. Thus, the radar device 10 can perform NCI with a peak for each transmit antenna. Therefore, even when a peak drop caused by a gain difference occurs in any one of a plurality of transmit antennas, a target can be detected. Also, an SNR for peaks can be improved by integrating each transmit antenna. For example, it is possible to improve the SNR by up to 4-fold (when the number of transmit antennas is four) according to the uniform phase step compared to the non-uniform phase step.

Also, final data of reflected signals may be 4Tx-4Rx NCI data corresponding to each of transmit antennas and receive antennas as shown in **FIG. 5B.**

However, referring to **FIG. 5C** and **FIG. 5D,** according to the non-uniform phase step in which a phase step between phase shifts with a predetermined magnitude is applied to each of a plurality of transmit antennas with different magnitudes, 2D FFT data of reflected signals received from the plurality of transmit antennas, respectively, are shown as peaks for the same target at different intervals in the Doppler axis direction in the R-D Map.

That is, according to the non-uniform phase step, the transmit antennas can be divided in the Doppler axis direction by using a predetermined phase difference, but when the Doppler axis is divided into quarters in the R-D Map, two targets appear as shown in **FIG. 5D.** Therefore, a peak of 4Rx NCI data corresponding to each of receive antennas can be obtained, and when a peak drop caused by a gain difference occurs in any one of the plurality of transmit antennas, a target cannot be detected. That is, according to the non-uniform phase step, a peak detection failure rate may be increased, and, thus, a target detection probability may be decreased.

According to the non-uniform phase step, the computation amount for division of the transmit antennas is very large and an additional computation core may be required. However, according to the uniform phase step compared to the non-uniform phase step, NCI data may be reduced in size to 1/4 with a 4-fold memory advantage.

The radar device 10 according to an embodiment may obtain an R-D Map by integrating the 2D FFT data of reflected signals in each of the transmit antennas and the receive antennas. In an embodiment, the radar device 10 may extract a group of candidates for the target by using a constant false alarm rate (CFAR) detection algorithm. For example, the CFAR detection algorithm may be a target detection algorithm generally used in the radar device 10. It can be used to detect the position of a peak in the R-D Map. For example, CA-CFAR, OS-CFAR, or the like may be used.

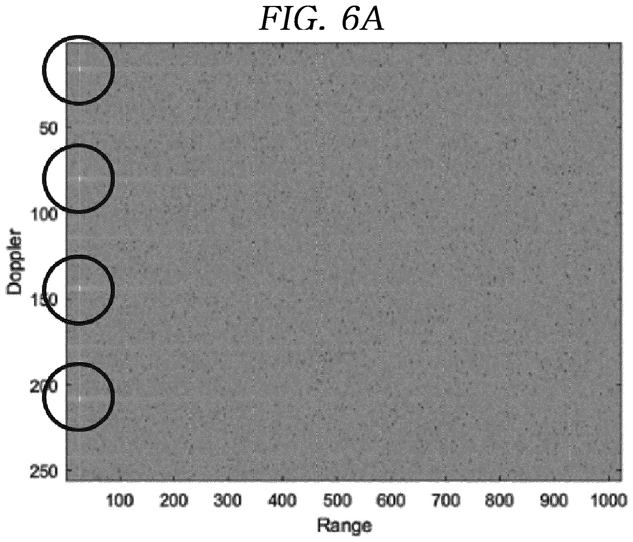

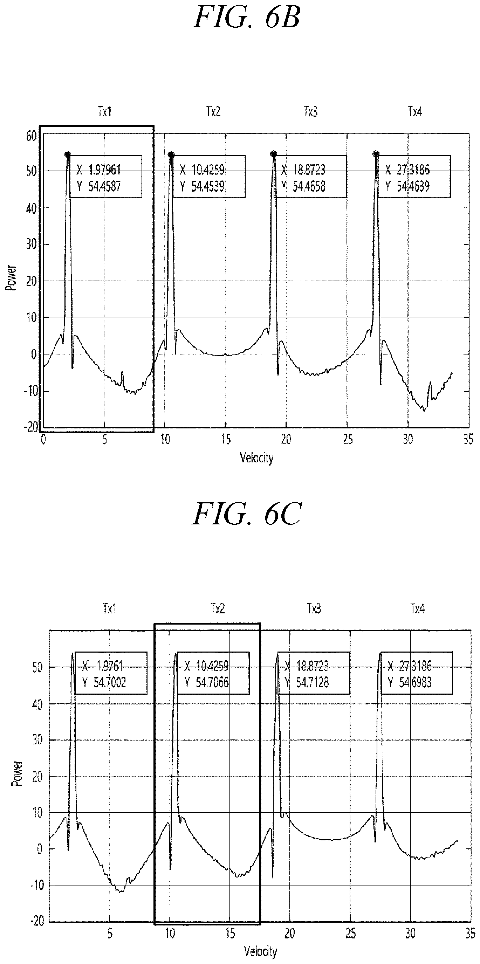

**FIG. 6A** is an R-D Map in which 2D FFT data of reflected signals are integrated according to an embodiment of the present disclosure. **FIG. 6B** and **FIG. 6C** are examples of the R-D Map of **FIG. 6A** after one-dimensional floating.

Referring to **FIG. 6A, FIG. 6B,** and **FIG. 6C,** the radar device 10 according to an embodiment may radiate transmit signals through a plurality of transmit antennas according to the uniform phase step, and when a reflected signal, which is at least a part of the radiated transmit signals, is subjected to 2D FFT and NCI, peaks corresponding to the respective transmit antennas can be obtained from the R-D Map.

In an embodiment, when the radar device 10 performs 1D plotting in the Doppler axis direction at a point where a peak occurs, Doppler ambiguity may occur as shown in **FIG. 6B** and **FIG. 6C.** The Doppler ambiguity refers to a phenomenon in which peaks occur at the same velocity interval.

As illustrated in **FIG. 6B,** the velocity of an actual target is 2 [m/s], but peaks with the same magnitude may occur at 10.4 [m/s], 18.87 [m/s], and 27.31 [m/s], respectively. A peak corresponding to a transmit antenna Tx1 applied with a phase shift of 0 Deg is a Doppler component (True Doppler) for the actual target. A peak corresponding to a transmit antenna Tx2 applied with a phase shift of 90 Deg occurs at 10.4 [m/s], a peak corresponding to a transmit antenna Tx3 applied with a phase shift of 180 Deg occurs at 18.87 [m/s], and a peak corresponding to a transmit antenna Tx4 applied with a phase shift of 270 Deg occurs at 27.31 [m/s]. A frequency shift occurs according to different phases for respective chirps.

However, as illustrated in **FIG. 6C,** the velocity of an actual target is 10.4 [m/s], but peaks with the same magnitude may occur at 2 [m/s], 18.87 [m/s], and 27.31 [m/s], respectively, as in **FIG. 6B.** That is, according to the DDMA, a position of a physical antenna is continuously changed in data corresponding to reflected signals depending on the velocity of the target, and, thus, an additional processing for matching data of a received reflected signal with the position of the physical antenna may be further required to identify the velocity of the target.

That is, due to the Doppler ambiguity, peaks corresponding to the respective transmit antennas occur in the R-D Map of reflected signals, and, thus, there may be ambiguity about the positions of the transmit antennas. Therefore, the radar device 10 according to the present disclosure may resolve the Doppler ambiguity by estimating a transmit antenna corresponding to a reflected signal.

In an embodiment, the radar device 10 is not aware of all the velocities of n number of peak data, and, thus, it is possible to resolve the Doppler ambiguity by estimating transmit antennas with respect to all the peaks. Also, peaks differ for respective frames, and, thus, it is possible to resolve the Doppler ambiguity by estimating transmit antennas with respect to all the peaks whenever a reflected signal is received.

Peak data Peakdata[n][Tx_ch*Rx_ch] of reflected signals according to an embodiment may be a result of 2D FFT complex corresponding to a peak, and may include n number of peak data depending on the number of peaks.

[Equation 6]

$$\text{Peakdata}[n][\text{Tx\_ch*Rx\_ch}]$$
$$= 2\text{DFFTData}[n][\text{Tx\_ch*Rx\_ch}]\_\text{real} \quad 1j*2\text{DFFTData}[n][\text{Tx\_Ch*Rx\_ch}]\_\text{Imag}$$

Herein, for example, Tx_ch may be 1 to 4, and Rx_ch may be 1 to 4.

According to an embodiment, nth peak data may include data about the numbers of transmit antenna and receive antennas (Tx_ch * Rx_ch = m). For example, when there are four transmit antennas and four receive antennas, the nth peak data may include sixteen data as follows.

The radar device 10 according to an embodiment may estimate a plurality of transmit antennas matched with a plurality of peaks, respectively, by estimating a Doppler component for the actual target.

[Equation 7]

$$f_{n,m} = [f_{n,1}\ f_{n,2}\ f_{n,3}\ f_{n,4} \quad f_{n,5}\ f_{n,6}\ f_{n,7}\ f_{n,8} \quad f_{n,9}\ f_{n,10}\ f_{n,11}\ f_{n,12} \quad f_{n,13}\ f_{n,14}\ f_{n,15}\ f_{n,16}]$$

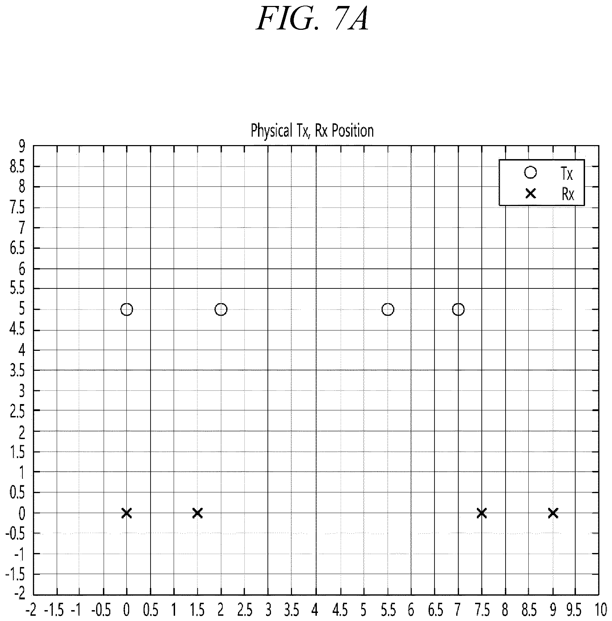

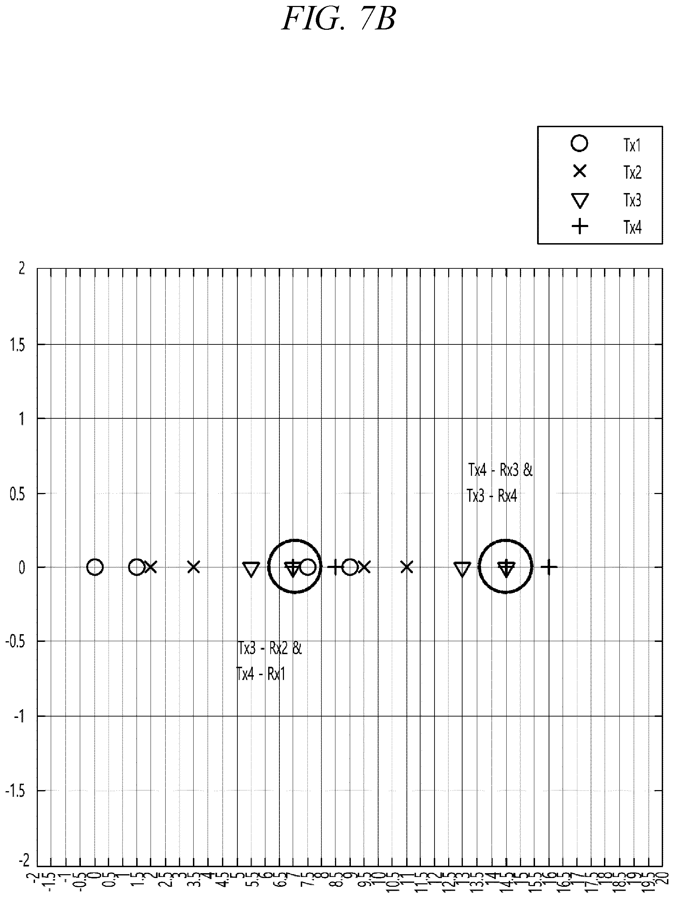

**FIG. 7A** shows a physical array of a plurality of transmit antennas Tx and a plurality of receive antennas Rx according to an embodiment of the present disclosure. **FIG. 7B** shows a virtual array of the plurality of transmit antennas Tx and the plurality of receive antennas Rx according to the embodiment of the present disclosure.

Referring to **FIG. 7A** and **FIG. 7B,** the radar device 10 according to an embodiment may include the plurality of transmit antennas Tx spaced apart from each other and the plurality of receive antennas Rx spaced part from each other as shown in **FIG. 7A.** In an embodiment, the plurality of transmit antennas Tx may be spaced apart from each other in the X-axis direction, the plurality of receive antennas Rx may be spaced part from each other in the X-axis direction, and the plurality of transmit antennas Tx may be spaced apart from the plurality of receive antennas Rx in the Y-axis direction.

Based on the physical array of the plurality of transmit antennas Tx and the plurality of receive antennas Rx included in the radar device 10 according to an embodiment, a virtual antenna array may be formed by using the MIMO as shown in **FIG. 7B.**

In an embodiment, the virtual antenna array may include a plurality of virtual receive antennas corresponding to the plurality of transmit antennas Tx1, Tx2, Tx3 and Tx4, respectively, by applying physical deviations in spacing from the plurality of transmit antennas to the plurality of receive antennas. For example, in the virtual antenna array, various X-axis deviations between the plurality of transmit antennas Tx1, Tx2, Tx3 and Tx4 and the plurality of receive antennas may be applied, but a uniform Y-axis deviation may not be applied for convenience sake.

In the virtual antenna array according to an embodiment, a plurality of physical transmit antennas Tx and a plurality of physical receive antennas Rx may be arranged such that at least two of a plurality of virtual receive antennas generated based on the plurality of transmit antennas and the plurality of receive antennas overlap with each other (Folded Array)

For example, as shown in FIG. 7B, a virtual receive antenna Tx3 - Rx2 and a virtual receive antenna Tx4 - Rx1 may overlap with each other, and a virtual receive antenna Tx4 - Rx3 and a virtual receive antenna Tx3 - Rx4 may overlap with each other.

The virtual receive antennas overlapping with each other in the virtual antenna array may vary depending on the layout design of the plurality of transmit antennas and the plurality of receive antennas, and as the number of pairs of virtual receive antennas overlapping with each other increases, the potential to estimate a transmit antenna and resolve the Doppler ambiguity may increase. However, the overall MIMO aperture may be decreased by the pairs of virtual receive antennas overlapping with each other in the virtual antenna array, which may cause degradation of performance, such as angular resolution, and an increase in computation time.

In an embodiment, if the defined nth peak data are listed with respect to all number of cases $F_{n,1}$, $F_{n,2}$, $F_{n,3}$ and $F_{n,4}$ for the plurality of transmit antennas, it can be represented as in the following equations. A phase step $\vartheta step$ is sequentially applied to a predetermined phase shift in the plurality of transmit antennas, and, thus, the number of cases of arranging a plurality of transmit antennas may be equal to the number of transmit antennas.

[Equation 8]

$$F_{n,1} = [f_{n,1}\ f_{n,2}\ f_{n,3}\ f_{n,4} \quad f_{n,5}\ f_{n,6}\ f_{n,7}\ f_{n,8} \quad f_{n,9}\ f_{n,10}\ f_{n,11}\ f_{n,12} \quad f_{n,13}\ f_{n,14}\ f_{n,15}\ f_{n,16}]$$
$$= [T_1R_1\ T_1R_2\ T_1R_3\ T_1R_4 \quad T_2R_1\ T_2R_2\ T_2R_3\ T_2R_4 \quad T_3R_1\ T_3R_2\ T_3R_3\ T_3R_4 \quad T_4R_1\ T_4R_2\ T_4R_3\ T_4R_4]$$

$$F_{n,2} = [f_{n,1}\ f_{n,2}\ f_{n,3}\ f_{n,4} \quad f_{n,5}\ f_{n,6}\ f_{n,7}\ f_{n,8} \quad f_{n,9}\ f_{n,10}\ f_{n,11}\ f_{n,12} \quad f_{n,13}\ f_{n,14}\ f_{n,15}\ f_{n,16}]$$
$$= [T_4R_1\ T_4R_2\ T_4R_3\ T_4R_4 \quad T_1R_1\ T_1R_2\ T_1R_3\ T_1R_4 \quad T_2R_1\ T_2R_2\ T_2R_3\ T_2R_4 \quad T_3R_1\ T_3R_2\ T_3R_3\ T_3R_4]$$

$$F_{n,3} = [f_{n,1}\ f_{n,2}\ f_{n,3}\ f_{n,4} \quad f_{n,5}\ f_{n,6}\ f_{n,7}\ f_{n,8} \quad f_{n,9}\ f_{n,10}\ f_{n,11}\ f_{n,12} \quad f_{n,13}\ f_{n,14}\ f_{n,15}\ f_{n,16}]$$
$$= [T_3R_1\ T_3R_2\ T_3R_3\ T_3R_4 \quad T_4R_1\ T_4R_2\ T_4R_3\ T_4R_4 \quad T_1R_1\ T_1R_2\ T_1R_3\ T_1R_4 \quad T_2R_1\ T_2R_2\ T_2R_3\ T_2R_4]$$

$$F_{n,4} = [f_{n,1}\ f_{n,2}\ f_{n,3}\ f_{n,4} \quad f_{n,5}\ f_{n,6}\ f_{n,7}\ f_{n,8} \quad f_{n,9}\ f_{n,10}\ f_{n,11}\ f_{n,12} \quad f_{n,13}\ f_{n,14}\ f_{n,15}\ f_{n,16}]$$
$$= [T_2R_1\ T_2R_2\ T_2R_3\ T_2R_4 \quad T_3R_1\ T_3R_2\ T_3R_3\ T_3R_4 \quad T_4R_1\ T_4R_2\ T_4R_3\ T_4R_4 \quad T_1R_1\ T_1R_2\ T_1R_3\ T_1R_4]$$

Herein, Tx and Ry refer to a physical array corresponding to a transmit antenna and a receive antenna, respectively.

The radar device 10 according to an embodiment may match frequency data of a reflected signal converted in the range-Doppler domain with a physical array derived from a plurality of physical arrays of a plurality of transmit antennas and a plurality of receive antennas.

A physical phase difference between signals received at the same position in the MIMO virtual antenna array may be very small physical phase difference. In an embodiment, virtual receive antennas overlapping with each other (Folded Array) among the plurality of receive antennas in the virtual antenna array may have a very small phase difference.

The radar device 10 according to an embodiment may derive any one of the plurality of physical arrays of the plurality of transmit antennas and the plurality of receive antennas based on a phase difference between reflected signals received through at least two virtual receive antennas arranged to overlap with each other.

In an embodiment, the radar device 10 may derive physical arrays of a plurality of transmit antennas and a plurality of receive antennas for which cost functions p1, p2, p3 and p4 depending on the sum of phase differences between reflected signals received through the at least two virtual receive antennas arranged to overlap with each other are minimized.

For example, when the virtual receive antenna Tx3 - Rx2 and the virtual receive antenna Tx4 - Rx1 among a plurality of virtual receive antennas overlap with each other and the virtual receive antenna Tx4 - Rx3 and the virtual receive antenna Tx3 - Rx4 among the plurality of virtual receive antennas overlap with each other, cost functions may be generated based on a phase difference between reflected signals corresponding to $T_3R_2$ and $T_4R_1$, respectively, and a phase difference between reflected signals corresponding to $T_3R_4$ and $T_4R_3$, respectively. For example, the cost functions may be generated as follows.

[Equation 9]

$$p_1 = |\angle \mathbf{F}_1(10) - \angle \mathbf{F}_1(13)| + |\angle \mathbf{F}_1(15) - \angle \mathbf{F}_1(12)|$$

$$p_2 = |\angle \mathbf{F}_2(14) - \angle \mathbf{F}_2(1)| + |\angle \mathbf{F}_2(3) - \angle \mathbf{F}_2(16)|$$

$$p_3 = |\angle \mathbf{F}_3(2) - \angle \mathbf{F}_3(5)| + |\angle \mathbf{F}_3(7) - \angle \mathbf{F}_3(4)|$$

$$p_4 = |\angle \mathbf{F}_4(6) - \angle \mathbf{F}_4(9)| + |\angle \mathbf{F}_4(11) - \angle \mathbf{F}_4(8)|$$

For example, in number of cases for physical antennas $F_{n,1}$, a cost function may be generated by the sum of a phase difference between $\angle F_1(10) = f_{n,10}$ and $\angle F_1(13) = f_{n,13}$ corresponding to $T_3R_2$ and $T_4R_1$, respectively, and a phase difference between $\angle F_1(12) = f_{n,12}$ and $\angle F_1(15) = f_{n,15}$ corresponding to $T_3R_4$ and $T_4R_3$, respectively.

For example, in number of cases for physical antennas $F_{n,2}$, a cost function may be generated by the sum of a phase difference between $\angle F_2(14) = f_{n,14}$ and $\angle F_2(1) = f_{n,1}$ corresponding to $T_3R_2$ and $T_4R_1$, respectively, and a phase difference between $\angle F_2(16) = f_{n,16}$ and $\angle F2(3) = f_{n,3}$ corresponding to $T_3R_4$ and $T_4R_3$, respectively.

For example, in number of cases for physical antennas $F_{n,3}$, a cost function may be generated by the sum of a phase difference between $\angle F3(2) = f_{n,2}$ and $\angle F3(5) = f_{n,5}$ corresponding to $T_3R_2$ and $T_4R_1$, respectively, and a phase difference between $\angle F_3(4) = f_{n,4}$ and $\angle F_3(7) = f_{n,7}$ corresponding to $T_3R_4$ and $T_4R_3$, respectively.

For example, in number of cases for physical antennas $F_{n,4}$, a cost function may be generated by the sum of a phase difference between $\angle F_4(6) = f_{n,6}$ and $\angle F_4(9) = f_{n,9}$ corresponding to $T_3R_2$ and $T_4R_1$, respectively, and a phase difference between $\angle F_4(8) = f_{n,8}$ and $\angle F_4(11) = f_{n,11}$ corresponding to $T_3R_4$ and $T_4R_3$, respectively.

$$\operatorname*{argmin}_{k} p_k (1 \leq k \leq 4)$$

In an embodiment, the radar device 10 identifies k ( ) for which a cost function is minimized and thus can estimate a physical antenna $f_{n,m} = F_{n,k}$ corresponding to the nth peak data.

For example, when k for which a cost function is minimized is 3, $f_{n,9}$ to $f_{n,12}$ may be matched with physical antennas Tx1 as described below.

[Equation 10]

$$F_{n,3} = [f_{n,1}\ f_{n,2}\ f_{n,3}\ f_{n,4}\quad f_{n,5}\ f_{n,6}\ f_{n,7}\ f_{n,8}\quad f_{n,9}\ f_{n,10}\ f_{n,11}\ f_{n,12}\quad f_{n,13}\ f_{n,14}\ f_{n,15}\ f_{n,16}]$$
$$= [T_3 R_1\ T_3 R_2\ T_3 R_3\ T_3 R_4\quad T_4 R_1\ T_4 R_2\ T_4 R_3\ T_4 R_4\quad T_1 R_1\ T_1 R_2\ T_1 R_3\ T_1 R_4\quad T_2 R_1\ T_2 R_2\ T_2 R_3\ T_2 R_4]$$

**Therefore,** peak data $f_{n,m}$ corresponding to a result of FFT complex of reflected signals may be matched with each physical antenna. That is, the radar device 10 according to an embodiment may match a reflected signal obtained through a receive antenna with the position of a transmit antenna.

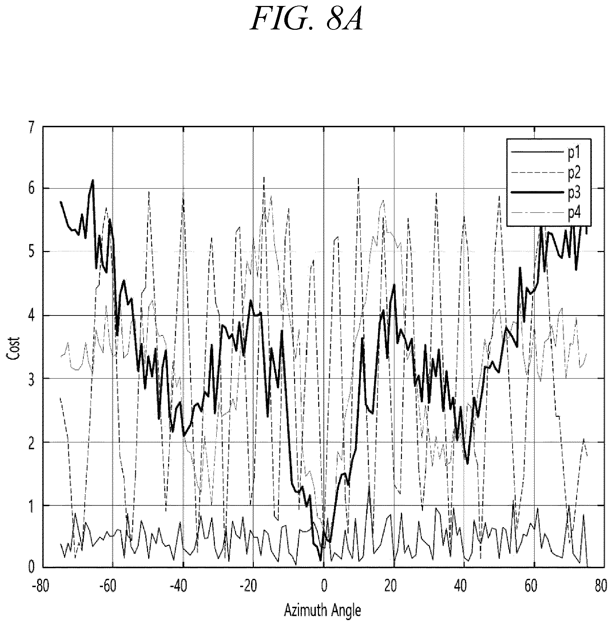

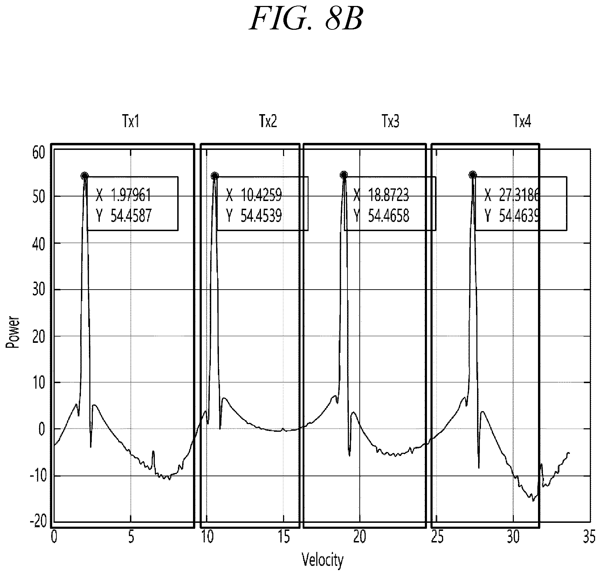

**FIG. 8A** shows graphs of the cost functions p1, p2, p3 and p4 depending on an angle according to an embodiment of the present disclosure. **FIG. 8B** is an R-D Map showing 2D FFT data of reflected signals according to the embodiment of the present disclosure. The simulated data shown in FIG. 8A may be added with Gaussian noises.

Referring to **FIG. 8A** and **FIG. 8B,** the radar device 10 according to an embodiment may simulate the cost functions p1, p2, p3 and p4 depending on an angle with respect to all number of cases for physical antennas capable of dealing with reflected signals. For example, the cost functions p1, p2, p3 and p4 may be represented by Equation 9 shown above.

In an embodiment, the radar device 10 may list all number of cases [Tx1 Tx2 Tx3 Tx4], [Tx2 Tx3 Tx4 Tx1], [Tx3 Tx4 Tx1 Tx2] and [Tx4 Tx1 Tx2 Tx3] for physical antennas with respect to peaks corresponding to the number of transmit antennas (e.g., four) and simulate the cost functions p1, p2, p3 and p4 for number of cases, respectively, as shown in **FIG. 8B.**

For example, as shown in **FIG. 8A,** it is confirmed that the cost function p1 for the array [Tx1 Tx2 Tx3 Tx4] of a physical antenna among the cost functions p1, p2, p3 and p4 for number of cases, respectively, is the smallest.

In an embodiment, the radar device 10 may match a peak of a reflected signal with each array of a physical antenna with the smallest cost function p1, p2, p3 or p4.

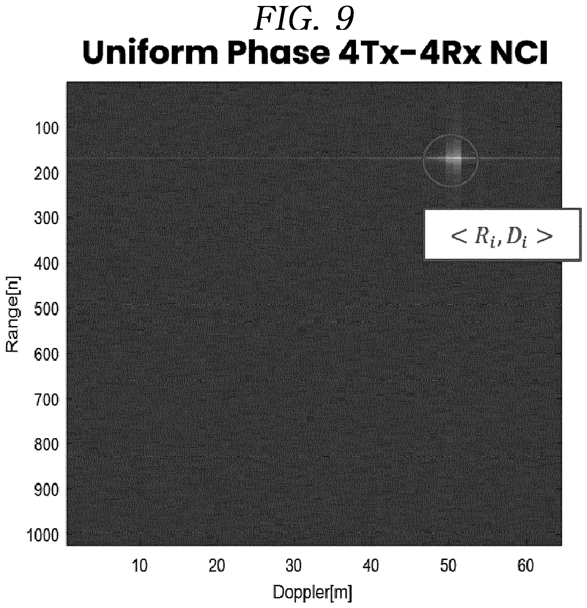

**FIG. 9** is an R-D Map showing 2D FFT data of reflected signals integrated in each of a transmit antenna and a receive antenna according to an embodiment of the present disclosure.

Referring to **FIG. 9,** the radar device 10 according to an embodiment may extract a frequency component of a range domain or a Doppler domain corresponding to a reflected signal based on the position of the estimated transmit antenna, and may obtain a distance to or a velocity of a target based on the extracted frequency component and the range resolution or the speed resolution.

In an embodiment, the radar device 10 may obtain a peak index $<R_i, D_i>$ including a range index $R_i$ and a Doppler index $D_i$ for a peak from an R-D Map obtained by 2D FFT. For example, the peak may be a result of NCI and/or CFAR.

In an embodiment, the frequency resolution with respect to the range axis and the Doppler axis in 2D FFT may be

$$\Delta R = \frac{c}{2B}$$

equal to the range resolution , c may denote the velocity of light, B may denote a chirp bandwidth and the

$$\Delta V = \frac{\lambda}{2 N_c T_c}$$

speed resolution , $\lambda$ may denote a wavelength, Nc may denote the number of chirps, and Tc may denote a pulse repetition interval (PRI).

In an embodiment, the radar device 10 may obtain the distance to and/or the velocity of the target from the product of the peak index and the range resolution and/or the speed resolution. For example, the distance to the target may be the product $R_i \cdot \Delta R$ of the range index and the range resolution, and the velocity of the target may be the product $D_i \cdot \Delta V$ of the Doppler index and the speed resolution.

Further, in order to increase the accuracy in the range and/or velocity, frequency estimation technique used for general range or speed estimation methods may be used. Since 2D FFT data are about a frequency axis, the accuracy can be improved by using various frequency estimation techniques.

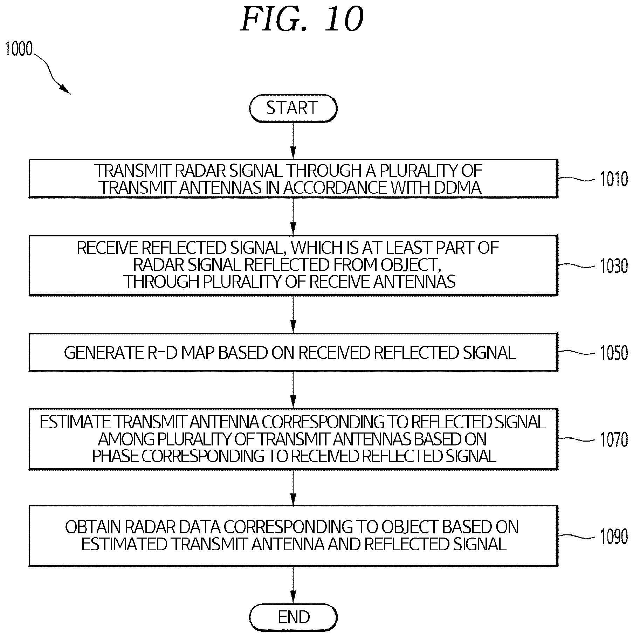

**FIG. 10** is a flowchart 1000 showing a method of processing a radar signal according to an embodiment of the present disclosure.

Referring to **FIG. 10,** the radar device 10 according to an embodiment may transmit radar signals through a plurality of transmit antennas Tx in accordance with the DDMA in an operation 1010.

The radar device 10 according to an embodiment may receive a reflected signal, which is at least a part of the radar signals reflected from a target, through the plurality of receive antennas Tx in an operation 1030.

The radar device 10 according to an embodiment may generate an R-D Map based on the received reflected signal in an operation 1050.

The radar device 10 according to an embodiment may estimate a transmit antenna corresponding to the reflected signal among the plurality of transmit antennas Tx based on a phase corresponding to the received reflected signal in an operation 1070.

**The** radar device 10 according to an embodiment may obtain radar data corresponding to the target based on the estimated transmit antenna Tx and the reflected signal in an operation 1090.

The method of processing radar signals in the radar device (10) described above can also be implemented in the form of a computer-readable medium containing a computer program or executable instructions stored on a computer-readable recording medium, executed by a computer. Moreover, the method of processing radar signals in the radar device (10) described above can also be implemented in the form of a computer program stored on a computer-readable medium, executed by a computer.

The computer-readable recording medium can be any available medium that can be accessed by a computer, including both volatile and non-volatile media, removable and non-removable media. Additionally, the computer-readable recording medium can include computer storage media. Computer storage media include all volatile and non-volatile, removable and non-removable media implemented in any method or technology for storing information such as computer-readable instructions, data structures, program modules, or other data.

The functions realized by the components described herein can be implemented in a processing circuitry that includes a general-purpose processor programmed to realize the described functions, a special-purpose processor, an integrated circuit, application-specific integrated circuits (ASICs), a central processing unit (CPU), circuits, and/or combinations thereof. The processor may include transistors or other circuitry and is considered a circuit or processing circuitry. The processor may also be a programmed processor that executes programs stored in memory.

In this specification, circuits, parts, units, and means are hardware or executing hardware programmed to realize the described functions. Such hardware can be any hardware disclosed in this specification or any known hardware programmed or executing to realize the described functions.

If the hardware is considered a processor type circuit, the circuit, part, means, or unit is a combination of hardware and software used to configure the hardware and/or processor.

The above description of the present disclosure is provided for the purpose of illustration, and it would be understood by a person with ordinary skill in the art to which the present invention belongs that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner, likewise, components described to be distributed can be implemented in a combined manner.

The scope of the present disclosure is defined by the following claims rather than by the detailed description of the embodiment, and it should be understood that all modifications and embodiments conceived from the meaning and scope of the claims and their equivalents are included in the scope of the present disclosure.

**Claims**

1. A radar device, comprising:

   a plurality of transmit antennas;
   a plurality of receive antennas; and
   a monolithic microwave integrated circuit (MMIC) configured to control the plurality of transmit antennas and the plurality of receive antennas,
   wherein the MMIC is configured to:

   transmit a radar signal through the plurality of transmit antennas in accordance with a Doppler division multiple access (DDMA),
   receive a reflected signal, which is at least a part of the radar signal reflected from a target, through the plurality of receive antennas,
   estimate a transmit antenna corresponding to the reflected signal among the plurality of transmit antennas based on a phase corresponding to the received reflected signal, and
   obtain radar data corresponding to the target based on the estimated transmit antenna and the reflected signal.

2. The radar device of Claim 1,
   wherein the radar signal includes a plurality of chirps to which a phase shift with a predetermined magnitude is consecutively applied.

3. The radar device of Claim 2,
wherein the phase shift with the predetermined magnitude is set differently for each of the plurality of transmit antennas and has a uniform magnitude.

4. The radar device of any one of Claims 1 to 3,
wherein the plurality of transmit antennas and the plurality of receive antennas are arranged such that at least two of a plurality of virtual receive antennas generated based on the plurality of transmit antennas and the plurality of receive antennas overlap with each other.

5. The radar device of Claim 4,
wherein the MMIC is configured to convert the received reflected signal into a frequency component in a range-Doppler domain by applying a Fast Fourier Transform (FFT) to the received reflected signal.

6. The radar device of Claim 5,
wherein, in the estimating the transmit antenna corresponding to the reflected signal among the plurality of transmit antennas, the MMIC is configured to match frequency data of the reflected signal converted in the range-Doppler domain with physical arrays of the plurality of transmit antennas and the plurality of receive antennas based on a phase of the reflected signal.

7. The radar device of Claim 6,
wherein, in the estimating the transmit antenna corresponding to the reflected signal among the plurality of transmit antennas, the MMIC is configured to:

derive any one of the plurality of physical arrays of the plurality of transmit antennas and the plurality of receive antennas based on a phase difference between reflected signals received through the at least two virtual receive antennas arranged to overlap with each other; and
match the frequency data of the reflected signal converted in the range-Doppler domain with the derived physical array.

8. The radar device of Claim 6 or 7,
wherein, the obtaining the radar data corresponding to the target, the MMIC is configured to:

extract a frequency component of a range domain or a Doppler domain corresponding to the reflected signal based on a position of the estimated transmit antenna, and
obtain a distance to the target or a velocity of the target based on the extracted frequency component and range resolution or speed resolution.

9. A method of processing a radar signal, comprising:

transmitting a radar signal through a plurality of transmit antennas in accordance with a Doppler division multiple access (DDMA);
receiving a reflected signal, which is at least a part of the radar signal reflected from a target, through a plurality of receive antennas;
estimating a transmit antenna corresponding to the reflected signal among the plurality of transmit antennas based on a phase corresponding to the received reflected signal; and
obtaining radar data corresponding to the target based on the estimated transmit antenna and the reflected signal.

## FIG. 1

## FIG. 2

# FIG. 3A

DDMA

Tx1

Phase 0° 0° ... 0° 0°

$90\text{deg} \cdot (1-1) \cdot q_N$

Frequency / Time

Tx2

Phase 0° 90° ... 180° 270°

$90\text{deg} \cdot (2-1) \cdot q_N$

Frequency / Time

Tx3

Phase 0° 180° ... 0° 180°

$90\text{deg} \cdot (3-1) \cdot q_N$

Frequency / Time

Tx4

Phase 0° 270° ... 0° 90°

$90\text{deg} \cdot (4-1) \cdot q_N$

Frequency / Time

*FIG. 3B*

# FIG. 4A

## DDMA R-D Map

# FIG. 4B

## TDMA R-D Map

# FIG. 5A

Uniform Phase 4Rx NCI

## FIG. 5B

**Uniform Phase 4Tx-4Rx NCI**

## FIG. 5C

# Non-Uniform Phase 4Rx NCI

*FIG. 5D*
## Non-Uniform Phase 4Tx-4Rx NCI

## FIG. 6A

## FIG. 6B

## FIG. 6C

# FIG. 7A

Physical Tx, Rx Position

# FIG. 7B

# FIG. 8A

# FIG. 8B

# FIG. 9
## Uniform Phase 4Tx-4Rx NCI

$< R_i, D_i >$

# FIG. 10

1000

START

TRANSMIT RADAR SIGNAL THROUGH A PLURALITY OF TRANSMIT ANTENNAS IN ACCORDANCE WITH DDMA — 1010

RECEIVE REFLECTED SIGNAL, WHICH IS AT LEAST PART OF RADAR SIGNAL REFLECTED FROM OBJECT, THROUGH PLURALITY OF RECEIVE ANTENNAS — 1030

GENERATE R-D MAP BASED ON RECEIVED REFLECTED SIGNAL — 1050

ESTIMATE TRANSMIT ANTENNA CORRESPONDING TO REFLECTED SIGNAL AMONG PLURALITY OF TRANSMIT ANTENNAS BASED ON PHASE CORRESPONDING TO RECEIVED REFLECTED SIGNAL — 1070

OBTAIN RADAR DATA CORRESPONDING TO OBJECT BASED ON ESTIMATED TRANSMIT ANTENNA AND REFLECTED SIGNAL — 1090

END

Europäisches
Patentamt

European
Patent Office

Office européen
des brevets

# EUROPEAN SEARCH REPORT

**Application Number**

EP 24 19 3836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 706 066 A (HAWKEYE TECH CO LTD; ZHONGQI CHUANGZHI TECHNOLOGY CO LTD) 5 July 2022 (2022-07-05) * paragraphs [0001] - [0103] * ----- | 1-9 | INV. G01S7/35 G01S13/34 G01S13/58 |
| X | EP 4 009 074 B1 (NXP USA INC [US]) 10 January 2024 (2024-01-10) | 1-3,9 | |
| A | * abstract * * paragraphs [0008] - [0058] * ----- | 4-8 | |
| X | CN 113 325 382 A (BEIJING INSTITUTE OF TECH CHONGQING INNOVATION CENTER ET AL.) 31 August 2021 (2021-08-31) | 1,9 | |
| A | * paragraphs [0001] - [0076] * ----- | 2-8 | |

**TECHNICAL FIELDS SEARCHED (IPC)**

G01S

The present search report has been drawn up for all claims

| Place of search | Date of completion of the search | Examiner |
|---|---|---|
| Munich | 22 January 2025 | van Norel, Jan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 3836

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2025

| Patent document cited in search report | Publication date | Patent family member(s) | Publication date |
|---|---|---|---|
| CN 114706066 A | 05-07-2022 | NONE | |
| EP 4009074 B1 | 10-01-2024 | CN 114578358 A | 03-06-2022 |
| | | EP 4009074 A1 | 08-06-2022 |
| | | US 2022171049 A1 | 02-06-2022 |
| CN 113325382 A | 31-08-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220334240 A1